# EUROPÄISCHE PATENTSCHRIFT

(11) **EP 0 482 224 B1**
(45) Veröffentlichungstag und Bekanntmachung des Hinweises auf die Patenterteilung: **12.01.1994**
(21) Anmeldenummer: 90120177.2
(22) Anmeldetag: 20.10.1990
(51) Int. Cl.: G01D 5/38

(54) **Interferentielle Messeinrichtung für wenigstens eine Messrichtung**
Interferometric measuring device for at least one measuring direction
Dispositif interférentiel de mesure pour au moins une direction de mesure

(43) Veröffentlichungstag der Anmeldung: 29.04.1992
(73) Patentinhaber: Dr. Johannes Heidenhain GmbH, D-83292 Traunreut (DE)
(72) Erfinder: Huber, Walter, Dipl.-Ing. (FH), W-8220 Traunstein (DE); Holzappel, Wolfgang, Dr. Dipl.-Phys., W-8201 Obing (DE)

(56) Entgegenhaltungen:
- EP-A- 0 163 362
- DE-A- 1 904 532
- FEINWERKTECHNIK, Band 75, Heft 12, Dezember 1971, Seiten 490-493; V. SIEBER: "Photoelektrischer x-y-Längenschrittgeber"

## Beschreibung

Die Erfindung betrifft eine interferentielle Meßeinrichtung für wenigstens eine Meßrichtung zur Messung der Relativlage von Objekten gemäß dem Oberbegriff des Anspruches 1.

Eine derartige interferentielle Meßeinrichtung wird insbesondere bei einer Bearbeitungsmaschine zur Messung der Relativlage eines Werkzeuges bezüglich eines zu bearbeitenden Werkstückes eingesetzt.

In der Dissertation "Photoelektrische Messung der Änderung von Längen- und Winkelpositionen mit Hilfe von Beugungsgittern" von Fromund Hock, Stuttgart 1978 ist im Abschnitt 11.6 eine interferentielle Meßeinrichtung gemäß dem Oberbegriff des Anspruches 1 für zwei Meßrichtungen beschrieben. Ein von einer Lichtquelle ausgehendes kollimiertes Lichtstrahlenbündel durchsetzt ein Kreuzgitter eines Maßstabs, das diagonal zu den beiden Meßrichtungen verläuft, sowie vier Ortsfrequenzfilterblenden und wird mittels zweier Objekte auf ein erstes Lineargitter abgebildet, das zur ersten Meßrichtung ausgerichtet ist und die Beugungsstrahlen vereinigt, die am Maßstab in diese erste Meßrichtung abgelenkt worden sind. Die vereinigten Beugungsstrahlen der ersten Meßrichtung werden mittels eines dritten Objektives auf erste Detektoren geleitet, die Abtastsignale zur Erzeugung von Meßwerten für die erste Meßrichtung liefern. Die Beugungsstrahlen, die am Maßstab in die zweite Meßrichtung abgelenkt worden sind, werden mittels eines vierten Objektives auf ein zweites Lineargitter abgebildet, das zur zweiten Meßrichtung ausgerichtet ist, und gelangen sodann auf zweite Detektoren, die Abtastsignale zur Erzeugung von Meßwerten für die zweite Meßrichtung liefern. Diese Meßeinrichtung besitzt den Nachteil eines sehr aufwendigen Aufbaues.

Weiterhin sind Meßeinrichtungen mit Kreuzgittern aus der DE- 19 04 532 A sowie aus Feinwerktechnik, 75, 1971, Heft 12, Seiten 490 - 493 bekannt. Bei beiden Meßeinrichtungen wird das am Kreuzgitter gebeugte Licht mit Hilfe eines Spiegelobjektives erneut auf das Kreuzgitter gelenkt und gebeugt. Im Strahlengang zwischen der Aufspaltung am Kreuzgitter und der Überlagerung der interferierenden Teilstrahlenbündel am Kreuzgitter sind mehrere optische Komponenten erforderlich. Diese Komponenten müssen mit interferometrischer Präzision hergestellt werden und sind damit sehr teuer. Auch die Montage dieser Teile ist äußerst aufwendig. Die Unabhängigkeit der beiden Meßrichtungen ist nur mit großem Aufwand realisierbar.

Aus der EP- 0 163 362 A1 ist eine interferentielle Meßeinrichtung für eine Meßrichtung bekannt, bei der ein von einer Lichtquelle ausgehendes, mittels einer Kollimatorlinse kollimiertes Lichtstrahlenbündel beim ersten Durchgang durch ein Abtastgitter in mehrere Beugungsstrahlen aufgeteilt wird, die an einem Maßstabgitter unter Reflexion wiederum gebeugt werden. Die reflektierten Beugungsstrahlen treten wieder unter erneuter Beugung durch das Abtastgitter und interferieren. Die interferierenden Beugungsstrahlen in Richtung resultierender 0., +1. und -1. Ordnung werden von der Kollimatorlinse getrennt und auf drei Detektoren zur Erzeugung elektrischer Abtastsignale zur Gewinnung von Meßwerten gelenkt.

Das Maßstabgitter muß bei dieser Meßeinrichtung derart ausgebildet sein, daß der Beugungsstrahl 0.Ordnung am Maßstabgitter unterdrückt wird; dies hat jedoch den Nachteil zur Folge, daß Beugungsstrahlen 3.Ordnung am Maßstabgitter auftreten, so daß die mittels der Detektoren gewonnenen Abtastsignale einen hohen Oberwellenanteil besitzen, der eine hohe Interpolation der Abtastsignale nicht zuläßt. Als weiteren Nachteil erweisen sich die direkten Reflexionen des Abtastgitters, die auf die Detektoren treffen und den Modulationsgrad erniedrigen. Da jedoch in der Praxis eine Unterdrückung des Beugungsstrahls 0.Ordnung am Maßstabgitter nur innerhalb gewisser Toleranzen möglich ist, tritt bei geringem Abstand zwischen dem Abtastgitter und dem Maßstabgitter in den Abtastsignalen eine störende Subharmonische auf, die ebenfalls keine hohe Interpolation der Abtastsignale zuläßt.

Der Erfindung liegt die Aufgabe zugrunde, eine interferentielle Meßeinrichtung für wenigstens eine Meßrichtung anzugeben, die bei einfachem Aufbau eine wesentlich höhere Meßgenauigkeit erlaubt.

Diese Aufgabe wird erfindungsgemäß durch die kennzeichnenden Merkmale des Anspruches 1 gelöst.

Die mit der Erfindung erzielten Vorteile bestehen insbesondere darin, daß durch die Verwendung eines Kreuzgitters nur Beugungsstrahlen detektiert werden, die am Kreuzgitter sowohl in Meßrichtung als auch senkrecht zur Meßrichtung abgelenkt werden; somit gelangen der Beugungsstrahl 0.Ordnung des Kreuzgitters ebenso wie die direkt vom Abtastgitter reflektierten Strahlen nicht auf die Detektoren. Man kann deshalb das Kreuzgitter so ausbilden, daß Beugungsstrahlen 3.Ordnung am Kreuzgitter unterdrückt werden, wodurch die gewonnenen Abtastsignale einen höheren Modulationsgrad und einen extrem geringen Oberwellenanteil aufweisen. Darüberhinaus treffen Beugungsstrahlen gerader Ordnung des Maßstabs, wie sie in der Meßeinrichtung der europäischen Patentanmeldung 0 163 362 B1 bei nicht vollkommener Ausbildung des Maßstabgitters auftreten, bei der erfindungsgemäßen Meßeinrichtung nicht auf die Detektoren. Die dadurch verbesserte Signalform erlaubt eine hohe Interpolation der Abtastsignale. Außerdem entsteht bei einem geringen Abstand zwischen dem Abtastgitter und dem Kreuzgitter keine störende Subharmonische in den Abtastsignalen.

Vorteilhafte Ausbildungen der Erfindung entnimmt man den abhängigen Ansprüchen.

Ausführungsbeispiele der Erfindung werden anhand der Zeichnung näher erläutert.

Es zeigen
- Figur 1: eine interferentielle Meßeinrichtung für zwei Meßrichtungen in einer schematischen Seitenansicht,
- Figur 2: eine Platine mit einer Lichtquelle und zwei Gruppen von Detektoren in einer Draufsicht,
- Figur 3: eine Abtastplatte mit zwei gekreuzten Abtastgittern in einer Draufsicht und
- Figur 4: einen entfalteten Strahlengang für die Meßeinrichtung nach Figur 1 in einer Meßrichtung.

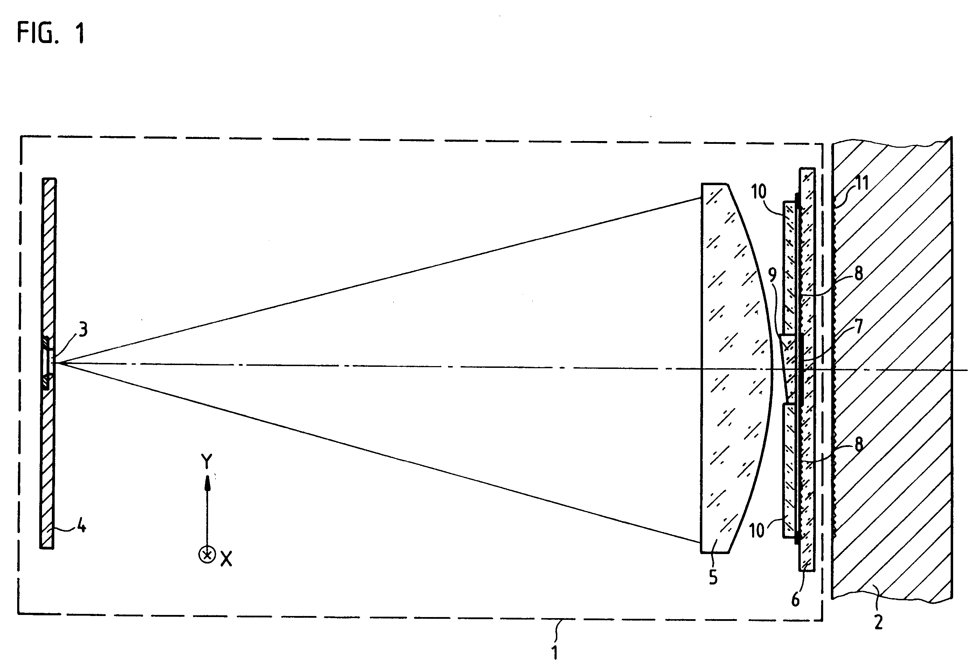

In Figur 1 ist in einer schematischen Seitenansicht eine interferentielle Meßeinrichtung für zwei Meßrichtungen X und Y dargestellt, bei der eine Abtasteinheit 1 einen Reflexionsmaßstab 2 abtastet. Die Abtasteinheit 1 enthält eine Platine 4, einen Kondensor 5 sowie eine Abtastplatte 6. Diese Meßeinrichtung dient zur Messung der Relativlage von nicht gezeigten Objekten.

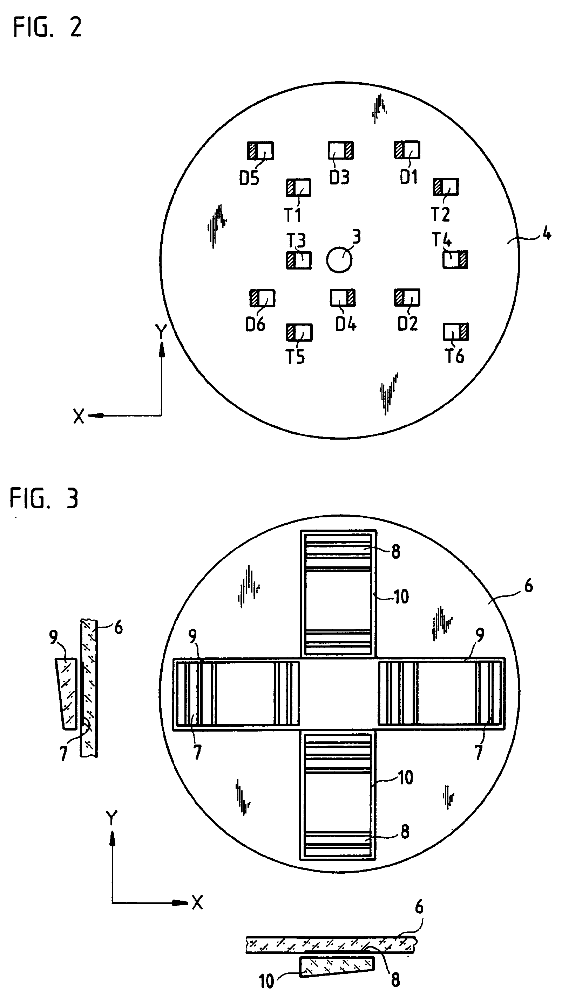

Figur 2 zeigt die Platine 4 in einer Draufsicht, auf der neben einer Lichtquelle 3 eine erste Gruppe von Detektoren D1-D6 für die Meßrichtung X und eine zweite Gruppe von Detektoren T1-T6 für die Meßrichtung Y angeordnet sind.

In Figur 3 ist die Abtastplatte 6 in einer Draufsicht dargestellt, die ein erstes Abtastgitter 7 für die Meßrichtung X sowie ein zweites Abtastgitter 8 für die Meßrichtung Y, beispielsweise in Form von Phasengittern, aufweist. Über dem ersten Abtastgitter 7 ist ein erstes Ablenkprisma 9 und über dem zweiten Abtastgitter 8 ein zweites Ablenkprisma 10 angeordnet, deren Neigungsorientierungen aus der Figur 3 ersichtlich sind.

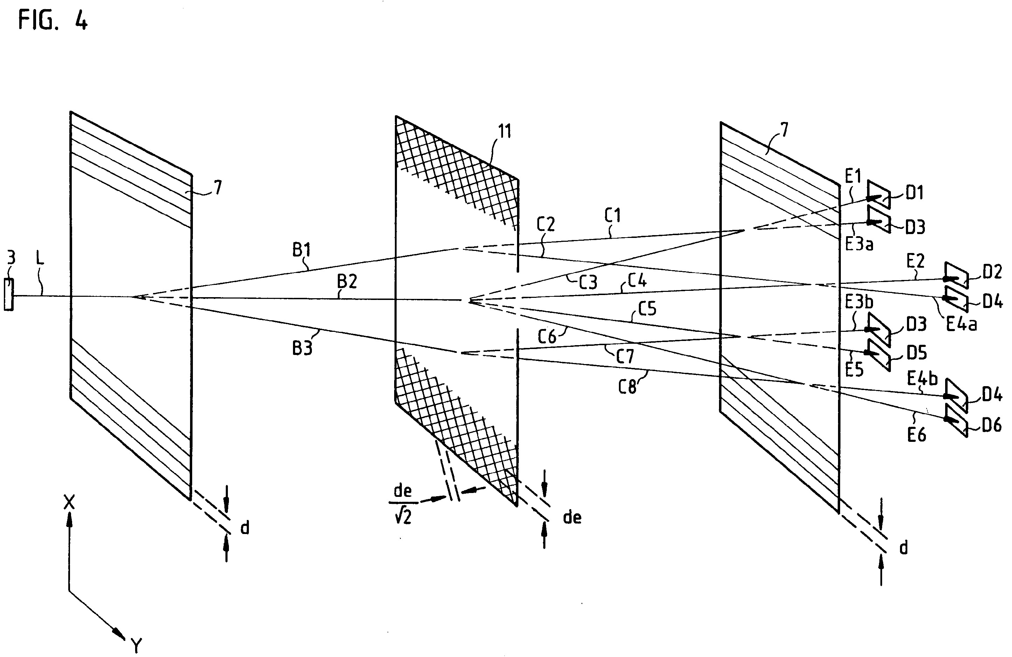

Figur 4 zeigt einen entfalteten Strahlengang für die interferentielle Meßeinrichtung nach Figur 1 in einer perspektivischen Darstellung, und zwar der Übersicht halber nur für die Meßrichtung X; es sind vereinfachend nur bestimmte Beugungsstrahlen eingezeichnet. Ein von der Lichtquelle 3 ausgehendes und vom Kollimator 5 kollimiertes Lichtstrahlenbündel L wird beim Durchtritt durch das Abtastgitter 7 mit der Gitterkonstanten d, dessen Gitterstriche senkrecht zur Meßrichtung X verlaufen, in mehrere Beugungsstrahlen aufgeteilt, von denen ein Beugungsstrahl B1 (+1.Ordnung), ein Beugungsstrahl B2 (0.Ordnung) und ein Beugungsstrahl B3 (-1.Ordnung) dargestellt sind.

Diese Beugungsstrahlen B1-B3 durchsetzen sodann ein Kreuzgitter 11 des Maßstabs 2, dessen gekreuzte Gitterstriche diagonal zu den beiden Meßrichtungen X und Y verlaufen. Dieses Kreuzgitter 11 besitzt in den durch die beiden gekreuzten Gitterstriche gegebenen Richtungen (diagonal zur Meßrichtung X) jeweils die Gitterkonstante de/√2 und damit in Meßrichtung X die effektive Gitterkonstante de, die mit der Gitterkonstanten d des Abtastgitters 7 identisch ist. Ein solches Kreuzgitter 11 ist als eine Struktur definiert, die Lichtstrahlen im wesentlichen in zwei orthogonalen Richtungen beugt. Das Kreuzgitter 11 spaltet jeden Beugungsstrahl B1-B3 in zwei Beugungsstrahlen (+1.Ordnung) und in zwei Beugungsstrahlen (-1.Ordnung) auf, die sowohl in der Meßrichtung X als auch in der dazu senkrecht verlaufenden Richtung Y durch die diagonale Anordnung des Kreuzgitters 11 abgelenkt werden.

Es werden somit der Beugungsstrahl B1 in zwei Beugungsstrahlen C1, C2 (-1.Ordnung) - die beiden Beugungsstrahlen (+1.Ordnung) sind hier der Einfachheit halber nicht dargestellt -, der Beugungsstrahl B2 in zwei Beugungsstrahlen C3, C4 (+1.Ordnung) und in zwei Beugungsstrahlen C5, C6 (-1.Ordnung) sowie der Beugungsstrahl B3 in zwei Beugungsstrahlen C7, C8 (+1.Ordnung) - die beiden Beugungsstrahlen (-1.Ordnung) sind ebenfalls nicht dargestellt - aufgespalten.

Die Beugungsstrahlen C1-C8 durchsetzen anschließend wiederum das Abtastgitter 7 und gelangen unter erneuter Beugung zur Interferenz. Es entstehen somit hinter dem Abtastgitter 7 aus den interferierenden Beugungsstrahlen C1, C3 der resultierende Beugungsstrahl E1 (+1.Ordnung) in Meßrichtung X und der resultierende Beugungsstrahl E3a (0.Ordnung) in Meßrichtung X, aus den interferierenden Beugungsstrahlen C2, C4 der resultierende Beugungsstrahl E2 (+1.Ordnung) in Meßrichtung X und der resultierende Beugungsstrahl E4a (0.Ordnung) in Meßrichtung X, aus den interferierenden Beugungsstrahlen C5, C7 der resultierende Beugungsstrahl E3b (0.Ordnung) in Meßrichtung X und der resultierende Beugungsstrahl E5 (-1.Ordnung) in Meßrichtung X sowie aus den interferierenden Beugungsstrahlen C6, C8 der resultierende Beugungsstrahl E4b (0.Ordnung) in Meßrichtung X und der resultierende Beugungsstrahl E6 (-1.Ordnung) in Meßrichtung X. Diese resultierenden Beugungsstrahlen E1-E6 fallen durch das Ablenkprisma 9 und den Kondensor 5 auf die erste Gruppe von Detektoren D1-D6 für die Meßrichtung X (die resultierenden Beugungsstrahlen E3a, E3b bzw. E4a, E4b fallen gemeinsam auf den Detektor D3 bzw. D4). Die Detektoren D1-D6 erzeugen elektrische Abtastsignale, aus denen Meßwerte für die Meßrichtung X gewonnen werden.

Ein nicht dargestellter gleichartiger Strahlengang besteht auch für die Meßrichtung Y, so daß die zweite Gruppe von Detektoren T1-T6 ebenfalls elektrische Abtastsignale erzeugt, aus denen Meßwerte für die Meßrichtung Y gewonnen werden.

Die beiden Trennelemente in Form der Ablenkprismen 9, 10 dienen zur Trennung der Beugungsstrahlen E1-E6 für die beiden Meßrichtungen X, Y, wenn nur eine Lichtquelle 3 vorgesehen ist. In nicht gezeigter Weise können als Trennelemente auch Gitter oder polarisationsoptische Elemente verwendet werden. Statt einer Lichtquelle können auch mehrere Lichtquellen vorgesehen sein, wobei unter Umständen die Trennelemente entfallen können. Ebenso ist es mit mehreren Lichtquellen möglich, die Beugungsstrahlengruppen, die zu den beiden Meßrichtungen X und Y gehören, mit nur einer einzigen Detektorgruppe, z.B. zeitversetzt zu erfassen.

Die Detektoren D1+D2, D3+D4 und D5+D6 werden jeweils paarweise zusammengeschaltet und liefern die Abtastsignale mit einer von der Ausgestaltung des Abtastgitters 7 abhängigen, gegenseitigen Phasenverschiebung, vorzugsweise von 120°, aus denen in bekannter Weise die Meßwerte für die Meßrichtungen X und Y gewonnen werden; das gleiche gilt für die zweite Gruppe von Detektoren T1-T6. In nicht dargestellter Weise kann auch eine andere Anzahl von Detektoren für jede Gruppe verwendet werden, z.B. drei Detektoren.

## Patentansprüche

1. Interferentielle Meßeinrichtung für wenigstens eine Meßrichtung zur Messung der Relativlage von Objekten, bei der mittels Lichtstrahlenbeugung eine Maßverkörperung (2) von einer Abtasteinheit (1) mit wenigstens einer Gruppe von mehreren Detektoren (D1-D6, T1-T6) zur Erzeugung von Abtastsignalen abgetastet wird, wobei die Maßverkörperung (2) ein Kreuzgitter (11) zur Erzeugung von Beugungsstrahlen (C1-C8) in der wenigstens einen Meßrichtung (X, Y) und in der dazu senkrechten Richtung (Y, X) aufweist, und daß zur Abtastung des Kreuzgitters (11) wenigstens ein Linien-Abtastgitter (7, 8) vorgesehen ist, dessen Gitterstriche senkrecht zur wenigstens einen Meßrichtung (X, Y) verlaufen, dadurch gekennzeichnet, daß die wenigstens eine Gruppe von Detektoren (D1-D6, T1-T6) für eine Meßrichtung derart angeordnet ist, daß nur Beugungsstrahlen detektiert werden, die an dem Kreuzgitter (11) sowohl in der wenigstens einen Meßrichtung (X, Y) als auch in der dazu senkrechten Richtung (X, Y) abgelenkt werden.

2. Meßeinrichtung nach Anspruch 1, dadurch gekennzeichnet, daß die Gitterstriche des Kreuzgitters (11) diagonal zur wenigstens einen Meßrichtung (X, Y) verlaufen.

3. Meßeinrichtung nach den Ansprüchen 1 und 2, dadurch gekennzeichnet, daß die Gitterkonstante d des wenigstens einen Abtastgitters (7, 8) gleich der effektiven Gitterkonstanten de des Kreuzgitters (11) in der wenigstens einen Meßrichtung (X, Y) ist.

4. Meßeinrichtung nach einem der Ansprüche 1 bis 3, dadurch gekennzeichnet, daß zumindest ein Abtastgitter (7, 8) zwischen wenigstens einer Lichtquelle (3) und dem Kreuzgitter (11) angeordnet ist.

5. Meßeinrichtung nach einem der Ansprüche 1-4, dadurch gekennzeichnet, daß bei zwei orthogonalen Meßrichtungen (X, Y) eine Abtastplatte (6) mit zwei gekreuzten Abtastgittern (7, 8) vorgesehen ist, deren Gitterstriche senkrecht zueinander verlaufen.

6. Meßeinrichtung nach einem der Ansprüche 1-5, dadurch gekennzeichnet, daß bei zwei orthogonalen Meßrichtungen (X, Y) eine gemeinsame Gruppe von Detektoren (D1-D6 oder T1-T6) vorgesehen ist.

7. Meßeinrichtung nach einem der Ansprüche 1-5, dadurch gekennzeichnet, daß bei zwei orthogonalen Meßrichtungen (X, Y) zwei separate Gruppen von Detektoren (D1-D6, T1-T6) vorgesehen sind.

8. Meßeinrichtung nach Anspruch 7, dadurch gekennzeichnet, daß zur Trennung der Beugungsstrahlen (E1-E6) der beiden Meßrichtungen (X, Y) Trennelemente (9, 10) vorgesehen sind.

9. Meßeinrichtung nach Anspruch 8, dadurch gekennzeichnet, daß das Trennelement (9, 10) aus wenigstens einem Ablenkprisma, einem Beugungsgitter oder einem polarisationsoptischen Element besteht.

10. Meßeinrichtung nach Anspruch 1, dadurch gekennzeichnet, daß zur Erzeugung von Abtastsignalen für eine Meßrichtung (X, Y) eine Gruppe von drei Detektoren vorgesehen ist.

11. Meßeinrichtung nach Anspruch 1, dadurch gekennzeichnet, daß zur Erzeugung von Abtastsignalen für eine Meßrichtung (X, Y) eine Gruppe von sechs Detektoren (D1-D6, T1-T6) vorgesehen ist, wobei jeweils diejenigen Detektoren paarweise zusammengeschaltet werden, die Beugungsstrahlen (E1-E6) detektieren, die in Meßrichtung (X, Y) dieselbe Neigung haben.

12. Meßeinrichtung nach Anspruch 1, dadurch gekennzeichnet, daß durch bestimmte Charakteristika des Abtastgitters (7, 8) eine definierte gegenseitige Phasenlage der Abtastsignale bewirkt wird.

## Claims

1. Interferential measuring device for at least one measuring direction for measuring the relative position of objects, wherein a measurement embodiment (2) is scanned by means of light beam diffraction by a scanning unit (1) with at least one group of several detectors (D1-D6, T1-T6) to generate scanning signals, the measurement embodiment (2) having a cross grating (11) for producing diffraction beams (C1-C8) in the at least one measuring direction (X, Y) and in the direction at right angles thereto (Y, X), and for scanning the cross grating (11) at least one linear scanning grating (7, 8) is provided whose grating lines extend at right angles to the at least one measuring direction (X, Y),characterised in that the at least one group of detectors (D1-D6,T1-T6) for one measuring direction is so arranged that only diffraction beams which are deflected at the cross grating (11) both in the at least one measuring direction (X, Y) and in the direction at right angles thereto (X, Y) are detected.

2. Measuring device according to claim 1, characterised in that the lines of the cross grating (11) extend diagonally to the at least one measuring direction (X, Y).

3. Measuring device according to claims 1 and 2, characterised in that the grating constant d of the at least one scanning grating (7, 8) is equal to the effective grating constant de of the cross grating (11) in the at least one measuring direction (X, Y).

4. Measuring device according to any one of claims 1 to 3, characterised in that at least one scanning grating (7, 8) is arranged between at least one light source (3) and the cross grating (11).

5. Measuring device according to any one of claims 1 to 4, characterised in that with two orthogonal measuring directions (X, Y) a scanning plate (6) is provided with two crossed scanning gratings (7, 8) whose lines extend at right angles to one another.

6. Measuring device according to any one of claims 1 to 5, characterised in that with two orthogonal measuring directions (X, Y) a common group of detectors (D1-D6 or T1-T6) is provided.

7. Measuring device according to any one of claims 1 to 5, characterised in that with two orthogonal measuring directions (X, Y) two separate groups of detectors (D1-D6, T1-T6) are provided.

8. Measuring device according to claim 7, characterised in that separating elements (9, 10) are provided for separating the diffraction beams (E1-E6) of the two measuring directions (X, Y).

9. Measuring device according to claim 8, characterised in that the separating element (9, 10) consists of at least one deviating prism, one diffraction grating or one photoelastic element.

10. Measuring device according to claim 1, characterised in that a group of three detectors is provided for generating scanning signals for one measuring direction (X, Y).

11. Measuring device according to claim 1, characterised in that a group of six detectors (D1-D6, T1-T6) is provided for generating scanning signals for one measuring direction (Xx, Y), those detectors being connected together in pairs in each case which detect diffraction beams (E1-E6) having the same inclination in the measuring direction (X, Y).

12. Measuring device according to claim 1, characterised in that a defined mutual phase relationship of the scanning signals is produced by means of specific characteristics of the scanning grating (7, 8).

## Revendications

1. Dispositif de mesure interférentiel pour au moins un dispositif de mesure de la position relative de deux objets, dans lequel une mesure matérialisée (2) est lue par diffraction de rayons lumineux par une unité de lecture (1) comportant au moins un groupe de plusieurs capteurs (D1-D6, T1-T6) en vue de produire des signaux de lecture, la mesure matérialisée (2) présente un réseau croisé (11) aux fins de produire des rayons diffractés (C1-C8) dans la direction de mesure (X, Y) au nombre d'au moins une et dans la direction (Y, X) perpendiculaire à celle-ci, dans lequel il est prévu, pour lire le réseau croisé (11), au moins un réseau de lecture linéaire (7, 8) dont les traits de réseau sont perpendiculaires à la direction de mesure (X, Y) au nombre d'au moins une, caractérisé par le fait que le groupe au nombre d'au moins un de détecteurs (D1-D6; T1-T6) pour une direction de mesure est disposé de manière telle que seuls les rayons diffractés qui sont déviés à la fois dans la direction de mesure (X, Y) au nombre d'au moins une et dans la direction (X, Y) perpendiculaire à celle-ci soient détectés.

2. Dispositif de mesure selon la revendication 1, caractérisé par le fait que les traits de réseau du réseau croisé (11) s'étendent en diagonale par rapport à la direction de mesure (X, Y) au nombre d'au moins une.

3. Dispositif de mesure selon les revendications 1 et 2, caractérisé par le fait que la constante de réseau "d" du réseau de lecture (7, 8) au nombre d'au moins un est identique à la constante de réseau effective "de" du réseau croisé (11) dans la direction de mesure (X, Y) au nombre d'au mois une.

4. Dispositif de mesure selon l'une des revendications 1 à 3, caractérisé par le fait qu'au moins un réseau de lecture (7, 8) est disposé entre au moins une source lumineuse (3) et le réseau croisé (11).

5. Dispositif de mesure selon l'une des revendications 1 à 4, caractérisé par le fait que, dans le cas de deux directions de mesure (X, Y) orthogonales, il est prévu une plaque de lecture (6) avec deux réseaux de lecture (7, 8) croisés dont les traits de réseau sont mutuellement perpendiculaires.

6. Dispositif de mesure selon l'une des revendications 1 à 5, caractérisé par le fait que, dans le cas de deux directions de mesure (X, Y) orthogonales, il est prévu un groupe commun de capteurs (D1-D6 ou T1-T6).

7. Dispositif de mesure selon l'une des revendications 1 à 5, caractérisé par le fait que, dans le cas de deux directions de mesure (X, Y) orthogonales, il est prévu deux groupes distincts de capteurs (D1-D6 ou T1-T6).

8. Dispositif de mesure selon la revendication 7, caractérisé par le fait que, pour séparer les rayons diffractés (E1-E6) des deux directions de mesure (X, Y), il est prévu des éléments séparateurs (9, 10).

9. Dispositif de mesure selon la revendication 8, caractérisé par le fait que l'éléments séparateur (9, 10) est formé d'au moins un prisme de déviation, d'un réseau de diffraction ou d'un élément optique polarisateur.

10. Dispositif de mesure selon la revendication 1, caractérisé par le fait que, pour produire des signaux de lecture pour une direction de mesure (X, Y), il est prévu un groupe de deux capteurs.

11. Dispositif de mesure selon la revendication 1, caractérisé par le fait que, pour produire des signaux de lecture pour une direction de mesure (X, Y) il est prévu un groupe de six capteurs (D1-D6; T1-T6), les capteurs qui détectent des rayons diffractés (E1-E6) ayant même inclinaison dans la direction de mesure (X, Y) étant connectés par paires.

12. Dispositif de mesure selon la revendication 1, caractérisé par le fait que grâce à des caractéristiques particulières du réseau de lecture (7, 8), on obtient un déphasage mutuel donné des signaux de lecture.
